# FASCICULE DE BREVET EUROPEEN

(11) **EP 2 062 043 B1**
(45) Date de publication et mention de la délivrance du brevet: **01.11.2017**
(21) Numéro de dépôt: 07823443.2
(22) Date de dépôt: 23.08.2007
(51) Int. Cl.: G01N 30/34, B01D 15/16, G01N 30/36, B01D 15/40, B01D 15/12

(54) **PROCÉDÉ D'ENRICHISSEMENT D'UN OU PLUSIEURS COMPOSÉS D'UN MÉLANGE UTILISANT UNE PHASE MOBILE LIQUIDE CONTENANT UN GAZ**
VERFAHREN ZUR ANREICHERUNG EINER ODER MEHRERER VERBINDUNGEN EINES GEMISCHS UNTER VERWENDUNG EINER EIN GAS ENTHALTENDEN FLÜSSIGEN MOBILEN PHASE
METHOD FOR ENRICHING ONE OR MORE COMPOUNDS OF A MIXTURE USING A LIQUID MOBILE PHASE CONTAINING A GAS

(30) Priorité: 28.08.2006 WO PCT/FR2006/001997
(43) Date de publication de la demande: 27.05.2009
(73) Titulaire: Novasep Process, 54340 Pompey (FR)
(72) Inventeur: MAJEWSKI, Wieslaw, 54520 Laxou (FR); VALERY, Eric, 54425 Pulnoy (FR); LUDEMANN-HOMBOURGER, Olivier, 54340 Pompey (FR)
(74) Mandataire: Hirsch & Associés
(86) Numéro de dépôt international: PCT/FR2007/001395
(87) Numéro de publication internationale: WO 2008/025895

(56) Documents cités:
- EP-A- 1 703 280
- EP-A2- 0 329 290
- EP-A2- 1 348 956
- LYNAM KENNETH G; BLACKWELL JOHN A: "Optimization of chiral resolution using packed columns with carbon dioxide-based mobile phases" CHIRALITY, vol. 9, no. 7, 1997, pages 672-677, XP002422496 WILEY-LISS cité dans la demande
- MAJEWSKI WIESLAW ET AL: "PRINCIPLE AND APPLICATIONS OF SUPERCRITICAL FLUID CHROMATOGRAPHY" JOURNAL OF LIQUID CHROMATOGRAPHY AND RELATED TECHNOLOGIES, MONTICELLO, NY, US, vol. 28, no. 7-8, 2005, pages 1233-1252, XP009078000 ISSN: 1082-6076
- PAGE STEVEN H; SUMPTER SHELDON R; LEE MILTON L: "Fluid phase equilibria in supercritical fluid chromatography with CO2-based mixed mobile phases: A review" JOURNAL OF MICROCOLUMN SEPARATIONS, vol. 4, no. 2, 1992, pages 91-122, XP002422497 WILEY

## Description

### DOMAINE TECHNIQUE

L'invention a pour objet un nouveau procédé d'enrichissement par chromatographie utilisant une phase mobile liquide contenant du gaz dissous ainsi que son utilisation pour l'enrichissement de composé d'un mélange en général, et l'utilisation de dispositifs connus pour sa mise en oeuvre.

### ETAT DE LA TECHNIQUE

On connaît divers procédés de chromatographie utilisant des éluants ou solvants très variés, favorisant la migration des solutés dans la colonne. On connaît la chromatographie en phase gaz, en phase liquide (dite aussi High Performance Liquid Chromatography ou HPLC), en phase supercritique ou subcritique, dénommée SFC pour Supercritical (ou Subcritical) Fluid Chromatography. Les éluants utilisés peuvent être des corps purs ou des mélanges; à titre d'exemple dans le domaine de la chromatographie supercritique ou subcritique, on utilise en général, en plus du CO₂, un co-solvant qui peut être par exemple un alcool.

On appelle état supercritique un état caractérisé soit par une pression et une température respectivement supérieures à la pression et à la température critique du corps dans le cas d'un corps pur, soit par une pression et une température respectivement supérieures à la pression et à la température critique du mélange dans le cas d'un mélange. Les fluides supercritiques ont des propriétés remarquables par rapport aux liquides notamment une plus faible viscosité et une plus grande diffusivité, ce qui améliore la séparation par chromatographie. La chromatographie peut également être appliquée à des fluides dits « non-supercritique » appelés « subcritiques » c'est à dire dans un état caractérisé soit par une pression supérieure à la pression critique et par une température inférieure à la température critique dans le cas d'un corps pur, soit par une pression supérieure aux pressions critiques de chacun des composants du mélange dans le cas d'un mélange (à ce sujet, référence est faite à la revue Informations Chimie 321, Octobre 1990, pages 166 à 177, article de Michel PERRUT « les fluides supercritiques, applications en abondance »).

Que l'éluant soit supercritique ou subcritique, les pressions sont toujours très élevées, ce qui impose des matériels, ainsi que des conditions opératoires, adaptés à ces pressions très élevées.

J. Microcolumn Séparations, 7(5) 477-483 (1995) décrit un système de chromatographie analytique faisant emploi d'un éluant méthanol/H₂O/CO₂ 49/21/30 (mol) à 204 atm. A 26°C, la perte de charge au niveau de la sortie de 4 colonnes est de 144.8 atm, tandis que pour 60°C, la perte de charge est de 81.9 atm. Ainsi, les pressions de sortie pour le mélange méthanol/H₂O/CO₂ s'établissent à 59.2 atm et 122.1 atm pour 26 et 60°C, respectivement. Dans le cas de l'utilisation à 26°C, la pression en sortie des colonnes est inférieure à la pression critique, tandis qu'elle est supérieure à la pression critique pour la température plus élevée en comparaison avec la pression critique du CO₂ seul. Cet article définit l'éluant "Enhanced-Fluidity Liquid mobile phase", utilisé dans la "Enhanced-Fluidity Liquid Chromatography" (EFLC), comme étant un éluant de HPLC classique auquel on a ajouté des proportions importantes d'un fluide de faible viscosité tel que le CO₂.

Anal. Chem. 1998, 70, 3298-3303 décrit un système de chromatographie analytique faisant emploi d'un éluant du type EFLC, ici THF/CO₂ à 260 atm (60/40 et 70/30). Les valeurs de pertes de charge affichées dans cet article ont été mesurées sur une colonne capillaire de 2m et sont difficilement comparables avec des colonnes standard de 25 cm et dépassent parfois (pour les débits élevés) la pression dans la pompe d'éluant (3000 psi).

Anal. Chem. 1999, 71, 2139-2145 décrit un système de chromatographie analytique faisant emploi de divers éluants (éthanol/hexane/CO₂, méthanol/CO₂, à 170 atm qui sont du type EFLC, ce document indiquant que la chromatographie de type EFLC implique l'utilisation de gaz liquéfiés tels que CO₂ et CHF₃, combinés avec des liquides polaires comme l'éthanol, en tant que phase mobile. Il est indiqué que la perte de charge enregistrée avec les solvants de type EFLC est plus faible, ce qui augmente la vitesse d'analyse. Les pressions de sortie sont cependant encore très élevées dans ce document, la pression d'entrée étant fixée à 170atm, tandis que la perte de charge est au plus de 21 bars environ (pour 10% de CO₂ ajouté). La pression de sortie est ici encore supérieure à la pression critique (En effet 170 bar moins 21 bar de perte de charge est une valeur nettement supérieure à la pression d'environ 74 bar, pression critique du CO₂ seul).

Chirality 9:672-677 (1997) décrit un procédé de séparation par chromatographie dans différentes conditions opératoires pour le solvant. Notamment, cet article étudie les effets de l'addition du CO₂ sur les points critiques (pression et température). L'article étudie le système binaire méthanol/CO₂, pour des quantités variables de CO₂. Le système binaire étudié est l'éluant méthanol/CO₂avec 10% mol de CO₂. Pour ce système binaire, les pressions et température critiques sont 114atm et 60°C, respectivement. L'article étudie l'effet des conditions opératoires sur la sélectivité, la rétention, la résolution. L'article conclut que la résolution optimale est obtenue avec une pression supercritique et une température subcritique.

La publication de Lynam et coll., Chirality, vol. 9, no 7 (1997) concerne l'optimisation d'une résolution chirale, utilisant des phases mobiles à base de CO₂ et étudie les effets de l'addition du CO₂ sur les points critiques (pression et température). Il s'agit de chromatographie analytique.

La demande européenne EP 1 348 956 concerne un procédé de collecte rapide d'échantillons par chromatographie en phase supercritique (SFC). Il est indiqué que dans la chromatographie SFC la phase mobile est constituée de CO₂ gazeux à un taux compris entre 50 et 95%.

La demande internationale WO 2005/066623 décrit une méthode de séparation par chromatographie en phase supercritique (SFC) avec pour phase mobile un gaz liquéfié avec des ratios de solvant dans gaz de 5 à 30% en poids.

La publication de Majewski Wieslaw et al, J. of Liquid Chromatography and related technologies, Monticello, NY US, vol 28 (7-8), 1233-1252 (2005) décrit dans une revue générale, les principes et l'application de la chromatographie supercritique. L'enseignement de cette méthode inclut l'utilisation d'un co-solvant et d'un solvant supercritique (CO₂). Il est évoqué l'extrapolation de la chromatographie analytique en chromatographie préparative dans le cadre de HPLC et non pas de la SFC. Cependant l'extrapolation propose une proportion élevée de CO₂ et une faible proportion de co-solvant.

La demande européenne EP 329 290 concerne un procédé amélioré d'analyse par chromatographie sur colonne capillaire en phase supercritique (SFC) utilisant un appareil destiné à contrôler la vitesse linéaire de la phase mobile pendant l'analyse chromatographique. Il s'agit encore d'un procédé d'analyse et non pas un procédé d'enrichissement.

Les documents de l'art antérieur ne permettaient pas de résoudre le problème de l'invention. Les articles ci-dessus, pour la plupart, traitent exclusivement de la chromatographie analytique.

Il reste toujours un besoin de procédés de séparation par chromatographie qui soient efficaces, qui ne nécessitent pas de conditions opératoires trop contraignantes, mais surtout qui permettent de collecter une masse de produit enrichi ou purifié dans des quantités aussi importantes que possible.

Aucun des documents ci-dessus ne décrit ni ne suggère la présente invention.

### RESUME DE L'INVENTION

L'invention fournit donc un procédé d'enrichissement par chromatographie d'un ou plusieurs composés d'un mélange dans au moins une colonne à l'aide d'un éluant caractérisé en ce que l'on utilise comme éluant une phase mobile liquide contenant du gaz dissous.

La teneur en gaz dans l'éluant est comprise entre 10 et 50% en volume.

Selon un mode de réalisation, la pression de sortie est inférieure à la pression critique du gaz de l'éluant.

Selon un mode de réalisation, le procédé est mis en oeuvre sur au moins une colonne présentant un rapport longueur sur diamètre L/D inférieur à 10, par exemple inférieur à 5.

Selon un mode de réalisation, la vitesse linéaire moyenne lors de la mise en oeuvre de l'enrichissement par chromatographie est supérieur à 0.3 cm/s.

Selon un mode de réalisation, le volume injecté de la solution contentant le dit composé à enrichir représente entre 1 et 20% du volume vide de ladite au moins une colonne, de préférence entre 2 et 10%.

Selon un mode de réalisation, l'injection dudit mélange dans ladite au moins une colonne se fait avec un liquide.

Selon un mode de réalisation de l'invention, l'éluant est à une température inférieure à la température critique du gaz de l'éluant.

Selon un mode de réalisation de l'invention, l'éluant est à une température supercritique et à une pression en sortie de colonne inférieure à la pression critique du gaz de l'éluant.

Selon un mode de réalisation de l'invention, l'éluant selon l'invention et constitué d'une phase mobile liquide, ladite phase mobile liquide contient du gaz dissous, préférentiellement du dioxyde de carbone dissous, et, de manière surprenante, reste homogène dans les conditions de températures et de pressions telles que définies selon la présente invention.

Selon un mode de réalisation de l'invention, l'éluant est à une pression qui correspond à la pression minimale à laquelle l'éluant serait une phase homogène, augmentée d'une valeur comprise entre 1 et 20 bars, de préférence entre 3 et 10 bars en sortie de ladite au moins une colonne.

Selon un mode de réalisation de l'invention, l'éluant comprend une phase mobile liquide contenant un gaz choisi parmi le dioxyde de carbone, le protoxyde d'azote, les alcanes légers et les gaz fluorés.

Selon un mode de réalisation de l'invention, l'éluant comprend une phase mobile liquide contenant du dioxyde de carbone dissout.

Selon un mode de réalisation, l'éluant selon l'invention est constitué d'une phase mobile liquide homogène contenant du gaz dissout à une pression subcritique et à une température supercritique.

Selon un mode de réalisation, l'éluant selon l'invention est constitué d'une phase mobile liquide homogène contenant du gaz dissout à une pression subcritique et à une température subcritique.

Selon un mode de réalisation de l'invention, le liquide de l'éluant est choisi parmi l'eau en mélange avec les solvants organiques miscibles, les alcools primaires contenant de 1 à 4 atomes de carbone, les alcanes contenant de 5 à 10 atomes de carbone, l'acétone, l'acétonitrile, les éthers cycliques et les esters.

Selon un mode de réalisation de l'invention, l'éluant est binaire, ternaire ou un mélange avec 4 ou plus de composants.

Selon un mode de réalisation de l'invention, le procédé est mis en oeuvre sur une phase stationnaire à base de silice ou encore mis en oeuvre sur une phase stationnaire chirale.

Selon un mode de réalisation de l'invention, le gaz est dissout dans l'éluant liquide par maintient d'une pression suffisante pour obtenir une phase liquide homogène tout au long de la colonne chromatographique.

Selon un mode de réalisation, l'invention se rapporte à l'utilisation de l'éluant selon l'invention, dans tout dispositif de chromatographie préparative, continu ou séquencé avec au moins une colonne, pour l'enrichissement d'un ou plusieurs composés d'un mélange.

Selon un mode de réalisation, l'invention se rapporte à l'utilisation d'un éluant constitué d'une phase mobile liquide contenant du gaz dissous dans des systèmes de chromatographie comprenant des colonnes à compression axiale.

L'invention se rapporte également à l'utilisation d'un dispositif de chromatographie préparative pour la mise en oeuvre du procédé selon l'invention.

Selon un autre mode de réalisation, l'invention se rapporte à l'utilisation en chromatographie préparative d'un éluant composé d'une phase mobile fluide contenant un gaz dissous et à une pression de sortie inférieure à la pression critique du gaz de l'éluant et à une température inférieure à la température critique du gaz de l'éluant.

Selon un autre mode de réalisation, l'invention se rapporte à l'utilisation en chromatographie préparative d'un éluant qui est un mélange monophasique d'un gaz et d'un liquide à une pression qui correspond à la pression minimale à laquelle l'éluant serait une phase homogène, augmentée d'une valeur comprise entre 1 et 20 bars, de préférence entre 3 et 10 bars.

L'invention a encore pour objet l'utilisation d'un dispositif de chromatographie préparative subcritique ou supercritique pour la mise en oeuvre du procédé selon l'invention.

L'invention a encore pour objet l'utilisation en chromatographie préparative d'un éluant composé d'une phase mobile fluide contenant un gaz dissous et à une pression de sortie inférieure à la pression critique du gaz de l'éluant et à une température inférieure à la température critique du gaz de l'éluant.

L'invention a encore pour objet l'utilisation en chromatographie préparative d'un éluant qui est un mélange monophasique d'un gaz et d'un liquide à une pression qui correspond à la pression minimale à laquelle l'éluant serait une phase homogène, augmentée d'une valeur comprise entre 1 et 20 bars, de préférence entre 3 et 10 bars.

L'invention offre de nombreux avantages par rapport à un système SFC classique. Notamment, la pression opérationnelle est plus faible et/ou le pouvoir solvant est plus élevé. Il est possible de réaliser la séparation avec les éluant selon l'invention dans les conditions de pression classiquement utilisées en HPLC. L'installation utilisant les éluants selon l'invention, par rapport à un dispositif de séparation SFC classique, ne nécessite pas de pompe CO₂ haute pression, pas de condenseur CO₂ ni de bain froid, pas d'évaporateur CO₂ ni de bain chaud et enfin pas de séparateurs haute pression. Cependant, l'homme du métier appréciera que les équipements SFC soient compatibles avec les éluants selon l'invention.

L'invention permet, par rapport à une chromatographie de type HPLC, et pour une vitesse linéaire comparable, d'augmenter le nombre de plateaux et de diminuer les pertes de charges, ce qui conduit à des performances de systèmes meilleures.

L'invention peut donc être mise en oeuvre sur des systèmes classiques, qu'ils soient SFC ou HPLC.

### BREVE DESCRIPTION DES FIGURES

- La figure 1 est une vue schématique d'une installation selon l'invention;
- La figure 2 est une représentation schématique d'un diagramme de phases pour un mélange binaire;
- La figure 3 est une représentation d'un calcul d'enveloppe de phases;
- La figure 4 est une représentation d'enveloppe de phases selon des données publiées;
- La figure 5 est une représentation d'un signal d'un capteur en fonction de la pression de éluant;
- La figure 6 représente les chromatogrammes de séparation dans un mode d'élution selon l'état de la technique et selon l'invention;
- Les figures 7a et 7b représentent les chromatogrammes de séparation dans un mode d'élution selon l'état de la technique et selon l'invention, dans le cas d'une injection surchargée;

### EXPOSE DETAILLE DE MODES DE REALISATION DE L'INVENTION

### Système chromatographique.

L'invention est mise en oeuvre avec toutes les techniques de chromatographies utilisant une phase stationnaire et un éluant dans l'état selon l'invention.

La chromatographie selon l'invention peut être continue, discontinue (batch) ou séquentielle (notamment connue sous le nom de SSMB). L'invention peut être mise en oeuvre sur une seule colonne, ou dans un dispositif multi-colonnes, les dispositifs à une seule colonne étant préférés ici.

La technologie de SMB est connue depuis longtemps, et est l'objet notamment des brevets suivants US2957927, US2985589, US3205166, US3291726 et US3310486 (UOP). Des colonnes avec des longueurs chromatographiques variables peuvent aussi être utilisées dans l'invention. Ainsi, on peut mettre en oeuvre l'invention dans un système dit Varicol®, développé par la demanderesse, et correspondant aux brevets US6136198, US6375839, US6712973, US6413419 et WO00/25885. On peut aussi mettre en oeuvre l'invention dans un système dit Cyclojet®, et correspondant aux brevets US5630943 et WO97/20206, ainsi que US6063284 et WO98/51391.

Tout autre procédé chromatographique, incluant la chromatographie batch, qu'il soit multi-colonnes ou non, peut être utilisé; on pourra citer les systèmes connus sous les noms de ModiCon® et PowerFeed®, ainsi que la chromatographie SMB deux zones.

L'utilisation de solvants supercritiques dans un dispositif multi-colonnes est décrite notamment dans WO93/22022.

L'invention utilise les phases classiques, telles que par exemple les phases stationnaires sur base de silice, les adsorbants phase inverse ou encore les phases chirales stationnaires (Chiral Stationary Phase ou CSP). La phase CSP qui peut être utilisée dans l'invention peut être: (i) un dérivé de cellulose (par ex. esters ou carbamates, de préférence déposé sur silice), éventuellement greffé, (ii) phase tartrate phase; (iii) phase CSP acide et basique (phase de Pirkle); (iv) un dérivé d'amylose (par ex. esters ou carbamates, de préférence déposé sur silice, éventuellement greffé), (v) phase polyacrylamide et (vi) autres.

Toute phase peut être utilisée et sera déterminée de façon classique par des tests de routine par l'homme du métier. Une phase stationnaire adaptée présentera une balance des propriétés suivantes a) temps de rétention; b) sélectivité; c) capacité de charge; d) productivité; et e) consommation d'éluant.

Tous les types de colonnes sont adaptés à la mise en oeuvre de l'invention. Cependant, on préférera utiliser des colonnes pour chromatographie préparative, présentant un diamètre suffisant. On utilisera de préférence des colonnes ayant des rapports longueur sur diamètre L/D inférieur à 10, avantageusement inférieur à 5.

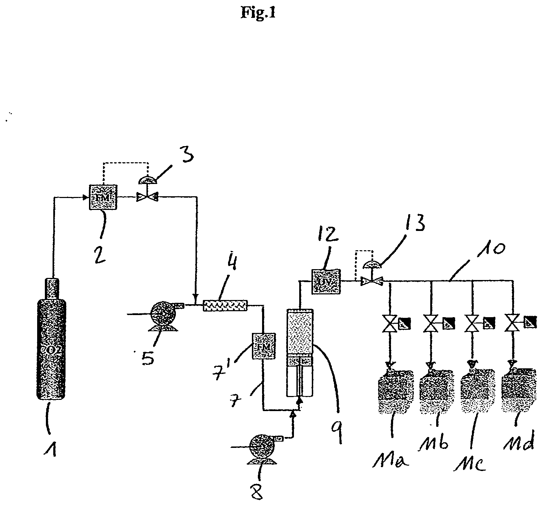

En référence à la figure 1, on décrit un système selon l'invention. Un réservoir 1 de CO₂ sous pression dont le débit est contrôlé par un débit-mètre 2 associé à une vanne 3 alimente un mélangeur 4, par exemple un mélangeur statique. Ce mélangeur 4 est aussi lui-même alimenté en liquide à partir d'une pompe de liquide 5. L'éluant ainsi obtenu est envoyé vers les colonnes, en passant par un débit-mètre 7' disposé sur la ligne 7. Une pompe de mélange à séparer 8 injecte dans la ligne 7 le mélange à séparer. La ligne 7 est reliée à l'alimentation d'une colonne 9 (qui peut être une colonne avec compression axiale dynamique). Cette colonne 9 alimente, par l'intermédiaire d'une ligne de soutirage 10, les pots de collecte 11a, 11b, 11c et 11d. Un détecteur, par exemple un détecteur UV 12 qui détecte la présence de soluté à la sortie de colonne est placé sur la ligne 10. Un régulateur 13 est disposé sur la ligne 10 pour réguler la pression en sortie de colonne 9. Le dispositif de collecte peut intégrer un jeu de vannes 2 voies, ou un système de type vanne rotative vers au moins deux récipients de collecte.

### Eluant.

L'éluant utilisé dans l'invention est un éluant spécifique. L'éluant selon l'invention est un mélange d'un gaz et d'un liquide, dans une phase homogène (ou monophasique). Les termes de gaz et liquide correspondent aux états des corps purs à température ambiante de 23°C et sous pression normale. Par exemple, le CO₂ est qualifié de gaz dans l'invention, tandis que le méthanol ou l'éthanol est qualifié de liquide dans l'invention. L'éluant selon l'invention n'est pas supercritique ou subcritique, car il est à une pression inférieure à la pression critique (alors que les éluants supercritiques ou subcritiques sont à une pression qui est supérieure à la pression critique du fluide considéré). L'éluant dans l'invention est à une pression inférieure à la pression critique, par exemple inférieure d'au moins 5bar à cette pression critique. La pression d'éluant selon l'invention est un paramètre opératoire qui assure l'homogénéité de la phase mobile. Le gaz utilisé dans la phase mobile est ainsi 'dissout' dans le ou les liquides utilisé pour réaliser l'éluant selon l'invention.

Des exemples de gaz susceptibles d'être utilisés dans l'invention sont: dioxyde de carbone, protoxyde d'azote, les alcanes légers (notamment contenant de 1 à 4 atomes de carbone, comme éthane, éthylène), les gaz fluorés (CHF₃).

Des exemples de liquides susceptibles d'être utilisés dans l'invention sont: eau en mélange avec les solvants organiques miscibles (par exemple eau et alcool ou eau et acétonitrile, la quantité d'eau étant de préférence inférieure à 50% en volume), alcools primaires en C₁-C₄ (par exemple méthanol, éthanol, isopropanol), alcanes (notamment contenant de 5 à 10 atomes de carbone, comme hexane, heptane), acétone, acétonitrile, éthers cycliques (par exemple THF), les esters (par exemple acétate d'éthyle) et tous les solvants organiques utilisés pour la chromatographie liquide et des phases mobiles inverses.

On peut former des binaires, des ternaires, ou des mélanges avec 4 ou plus de composants. En général, on utilise un gaz et un liquide ou un gaz et deux liquides.

La quantité de gaz dissout dans le liquide est variable, et peut être comprise entre 10 et 50% en volume (L'utilisation de quantités en volume est pratique, parce que la plupart de systèmes chromatographiques utilisent des pompes volumétriques). La teneur optimale en gaz est déterminée par expériences.

L'éluant selon l'invention est "gonflé" avec le gaz dissout, il y aura alors diminution de la viscosité et augmentation de la diffusivité, ces deux paramètres étant important dans l'application chromatographique.

On remarquera aussi que le pouvoir solvant des éluants selon l'invention peut ne pas être modifié par l'ajout de gaz au liquide. Mais il est aussi possible, en jouant sur la pression et la quantité de gaz et plus préférentiellement dans le cas du CO₂, de modifier le pouvoir solvant. On peut se référer, à titre d'exemple, au document Supercrit. Fluids, vol.23, 2002, p. 195, pour une illustration de la solubilité de l'acide salicylique dans le propanol en fonction de la température et de la pression du CO₂.

Dans la mesure où il est possible d'ajuster les propriétés de l'éluant (viscosité, diffusivité, pourvoir solvant), on peut qualifier cet éluant de néotérique (il s'agit d'un solvant "tunable").

### Procédé d'enrichissement ou de séparation.

Le présent procédé est un procédé d'enrichissement; à la différence des procédés de l'état de la technique utilisant des mélanges de liquide et de gaz, le procédé selon l'invention conduit à des fractions isolées qui sont utilisées. L'invention est l'utilisation en chromatographie préparative d'un éluant qui est une phase mobile liquide contenant un gaz dissous.

Les conditions opératoires utilisées dans l'invention sont définies en fonction de la quantité de gaz dans l'éluant, du type de gaz, du type de liquide, et de la température. En fonction de ces éléments, on peut définir une pression opératoire. En général, on fixe la pression en sortie du dispositif de chromatographie et on ajuste ensuite le débit (ce qui conduit à une perte de charge donnée).

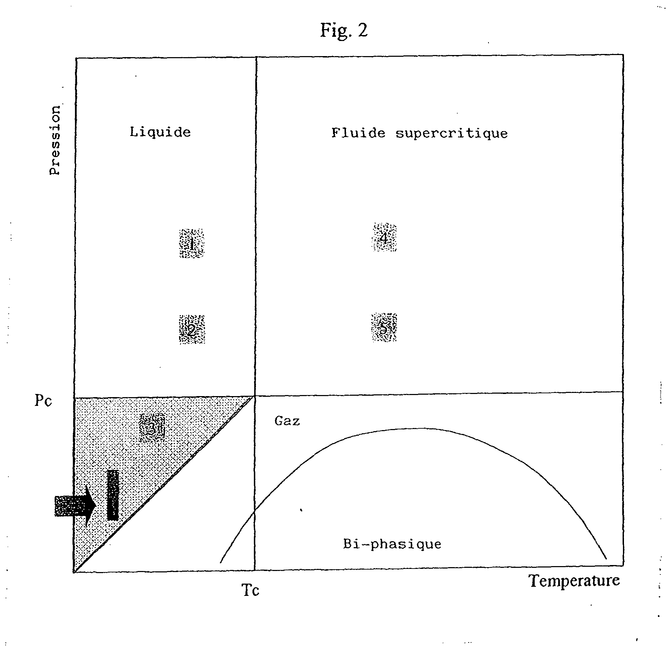

A titre d'exemple, pour un binaire classique du type méthanol/CO₂, on est en-dessous de la pression critique, donc en première approximation vers 100-110bars au maximum. On est aussi au-dessus de la pression d'apparition des premières bulles de gaz, soit en première approximation vers 30bars. La zone correspond à la zone 3 dans la figure 2.

En référence à la figure 2, on décrit un diagramme de phases d'un mélange, ce diagramme schématique étant extrait de Chirality 9:672-677 (1997). On retrouve les classifications des zones dans cet article, 1, 2, 3, 4 et 5. Les zones 1 et 2 sont à une température subcritique et une pression supercritique. Les zones 4 et 5 sont à une température supercritique et une pression supercritique. La zone triangulaire 3 est à une température subcritique et une pression subcritique. Dans la partie des températures élevées avec pression subcritique, il se produit l'apparition de deux phases (séparation de la phase gaz et de la phase liquide). L'invention est mise en oeuvre dans la région 3. Elle est représentée par un triangle de façon schématique. Elle correspond à cette zone pour laquelle le solvant est une phase homogène, mais à une pression subcritique et à une température subcritique. Elle est également mise en oeuvre selon un mode particulier de réalisation de l'invention grâce à l'éluant caractéristique selon l'invention dans la zone définie par une pression subcritique et à une température supercritique et pour laquelle le solvant est une phase mobile liquide homogène.

Les conditions opératoires peuvent être définies de façon plus précise, notamment en déterminant la pression minimale à laquelle la chromatographie est mise en oeuvre de sorte que l'éluant reste en phase homogène sur la totalité des zones chromatographiques.

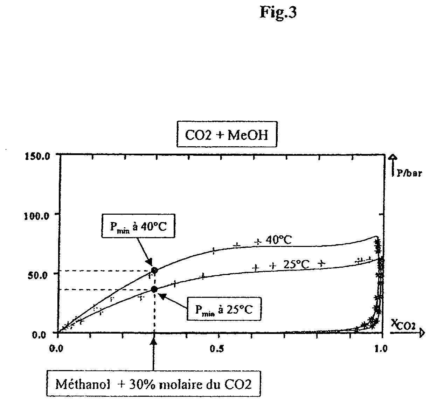

On peut utiliser par exemple la méthode de l'enveloppe de phases calculées. On calcule une enveloppe de phases pour un binaire donné. Cette méthode est décrite dans Pascale Borg, Jean-Noël Jaubert and Félicie Denet, (Fluid Phase Equilibria Vol 191, Issues 1-2, 2001, pp. 59-69). La figure 3 donne les courbes calculées pour deux températures choisies de 25 et 40°C. On détermine sur les courbes, par exemple pour une teneur en CO₂ de 30%, des pressions minimales pour ces deux températures.

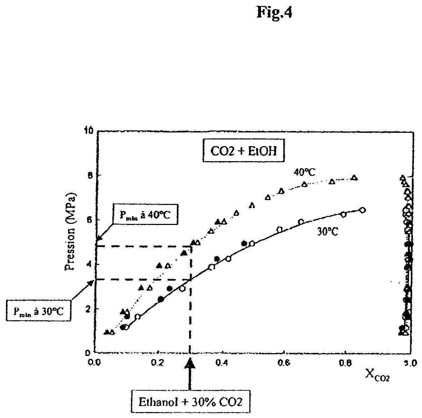

On peut aussi utiliser les données qui sont publiées dans la littérature, pour certains mélanges. Par exemple, pour le mélange éthanol/CO₂, on peut trouver ces valeurs expérimentales. La figure 4 montre un exemple d'un tel système binaire à 30 et 40°C (Bull. Korean Chem. 2002, Soc., Vol. 23, No 6).

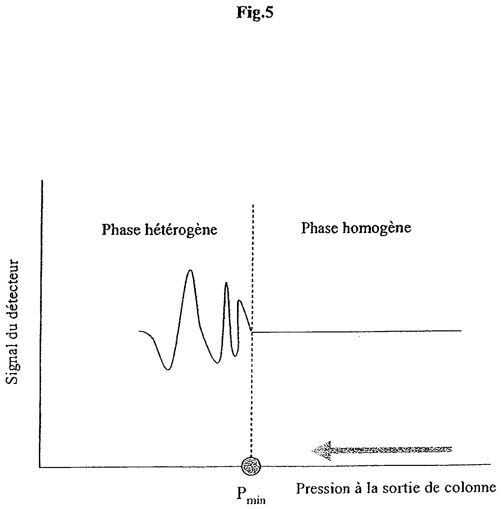

On peut encore déterminer cette pression de façon expérimentale, pour tout mélange. Il s'agit d'une méthode expérimentale simple qui est basée sur la réponse d'un détecteur UV à la sortie de colonne en fonction de la pression. Pour une composition d'éluant fixe et à une température donnée on applique un gradient descendant de la pression à la sortie de colonne et on commence à enregistrer le signal du détecteur. Si la phase sortante de la colonne est homogène, le signal est "propre" et sans forte perturbation de la ligne de base. L'apparition des perturbations de cette ligne détecte la formation d'une deuxième phase (dans ce cas de la phase du gaz qui n'est plus soluble dans l'éluant liquide). La pression correspondant à ce phénomène donne la valeur de Pₘᵢₙ à laquelle on peut travailler avec une phase homogène. La figure 5 illustre cette méthode, pour un mélange par exemple un mélange ternaire: C7/IPA/CO₂ à 20°C.

Une fois la pression minimale déterminée, pour des raisons de robustesse, en général on fixe la pression opératoire en sortie de colonne à une valeur légèrement supérieure, par exemple supérieure de 5bars. La pression opératoire est donc Pₘᵢₙ + 5. Typiquement, on détermine la pression Pₘᵢₙ et on ajoute entre 1 et 20 bars, de préférence entre 3 et 10 bars.

L'invention peut être mise en oeuvre dans des conditions spécifiques de vitesse linéaire et de volume injecté.

En ce qui concerne la vitesse linéaire, elle est significativement plus élevée que dans l'état de la technique indiqué dans la partie introductive. Dans le cas de HPLC, la vitesse linéaire est typiquement de l'ordre de 0.1-0.2cm/s. Dans le cas de l'état de la technique sur les EFLC, la vitesse linéaire est de l'ordre de 0.2cm/s. A titre de comparaison, la vitesse linéaire, dans l'invention, est typiquement supérieure à 0.3 cm/s.

Une telle vitesse linéaire présente l'avantage que les produits sortent plus vite. Donc il existe un gain en temps de cycle: l'injection se fait plus souvent, la production est augmentée. L'inconvénient traditionnellement associé à une vitesse linéaire élevé est que la pression augmente dans la colonne (car le fluide traverse un milieu poreux). Mais comme l'éluant selon l'invention présente une viscosité plus faible, la perte de charge est réduite; ainsi l'inconvénient traditionnel est compensé par la qualité de l'éluant selon l'invention.

Un autre inconvénient traditionnellement associé à une vitesse linéaire élevé est que, en augmentant la vitesse, on prend le risque de diminuer l'efficacité des colonnes. En effet, si on augmente la vitesse dans les colonnes, en général on favorise l'étalement des pics. En outre, dans l'application préparative, on augmente la quantité de mélange à séparer ("injection surchargée"), afin de saturer la phase. Ainsi, augmenter la vitesse dans le cas d'une charge élevée, voire d'une injection surchargée, n'est pas souhaitable. De façon surprenante, la demanderesse a mis en évidence que le risque de diminution de l'efficacité de la colonne n'est pas avéré de façon suffisamment significative pour faire baisser la quantité de produit injectable permettant une bonne séparation des produits.

La quantité injectée dans un procédé de séparation préparative est significativement plus importante que dans un procédé analytique; en général le comportement de la colonne n'est plus linéaire dans un procédé de séparation préparative.

Le volume de la solution contenant les produits séparés injecté dans la colonne peut par ailleurs être relativement important. Dans le cas de l'application analytique, le volume injecté, en % du volume de la colonne vide, est en général inférieure à 1%. Dans le cas de l'invention, la demanderesse a constaté de façon surprenante que le volume injecté pouvait être augmenté jusque plusieurs pourcents, typiquement jusque 20%, sans poser de problème. Si on conçoit aisément qu'un faible volume injecté (<1%) ne trouble pas le système, il en est autrement avec des volumes beaucoup plus grands. Le phénomène est encore plus surprenant lorsque l'injection est effectuée non pas avec l'éluant de l'invention, mais avec la seule phase liquide de cet éluant.

L'invention peut néanmoins aussi utiliser des boucles d'injection connues dans les systèmes de chromatographie. Le mélange à séparer est injecté dans la boucle, puis il pénètre dans la colonne. Ce système est notamment utilisé dans la SFC. Il sera possible de mettre en place une telle boucle dans le cas de l'invention, avec le même éluant dans la bouche que dans les colonnes. Mais il est préférable, car plus simple, d'utiliser comme véhicule d'injection le seul liquide de l'éluant.

Ainsi, l'invention fournit un procédé de séparation ou d'enrichissement par chromatographie d'un mélange dans au moins une colonne à l'aide d'un éluant, ladite au moins une colonne étant une colonne de chromatographie préparative (notamment présentant un rapport L/D inférieur à 10), l'éluant utilisé étant une phase mobile liquide contenant du gaz dissous.

Le procédé selon l'invention permet une mise en oeuvre à une vitesse linéaire moyenne supérieure à 0.3 cm/s et avec un volume de mélange à séparer injecté qui représente entre 2 et 20% du volume vide de la ou des colonnes de chromatographie.

Le procédé selon l'invention permet une mise en oeuvre avec une injection dudit mélange dans la colonne avec un liquide (celui de l'éluant) et avec un volume de mélange à séparer injecté qui représente entre 1 et 20% du volume vide de la colonne de chromatographie.

L'invention est par ailleurs mise en oeuvre sur des lits chromatographiques traditionnels. Ces lits peuvent aussi être comprimés dans des colonnes à compressions axiales ou dans des colonnes à chargement et compression du lit rapides de type Pack-n-Sep® (société Novasep). Les colonnes analytiques sont remplies avec la phase selon un procédé en général flash. Dans le cas de colonnes de grands diamètres, à savoir les colonnes préparatives, on charge la colonne avec la phase qui est en général dans le même solvant que celui utilisé pour la chromatographie. Ce principe n'est pas applicable à l'éluant selon l'invention, car il doit être manipulé sous pression. En fait, la phase peut être chargée et éventuellement comprimée dans le solvant liquide entrant dans la composition de l'éluant selon l'invention. Cette utilisation de liquide qui n'est pas le même que celui utilisé lors de la chromatographie ne pose, de façon surprenante, pas de problème de fonctionnement.

L'éluant, une fois qu'il a entraîné le soluté, devient des fractions isolées. Ces fractions sont traitées de façon classique pour séparer les composés dissous. En général, le gaz est perdu mais le liquide peut est recyclé. Un recyclage de gaz peut néanmoins être prévu, le cas échéant.

### EXEMPLES

Les exemples suivants illustrent l'invention sans la limiter.

### Exemple 1.

On sépare les énantiomères du TSO (trans-stillbène oxide) dans les conditions suivantes, correspondant aux conditions de la chromatographie analytique.
Colonne Chiralcel OD-20µm, 4.6mm x 25 cm (Chiral Technologies Europe, Illkirch, France)
Température 20°C
Pression sortie: 1bar (en mode HPLC) et 50 bar en mode selon l'invention avec l'éluant selon l'invention.
Eluant liquide : heptane/IPA 70/30 (v/v)
Débit d'éluant non-expansé = 1.4 ml/min
Taux d'expansion en CO₂ de 30 et 40%
Pertes de charge de 9 et 10 bar, respectivement
Volume/quantité de TSO injecté 20µl/0.64 mg

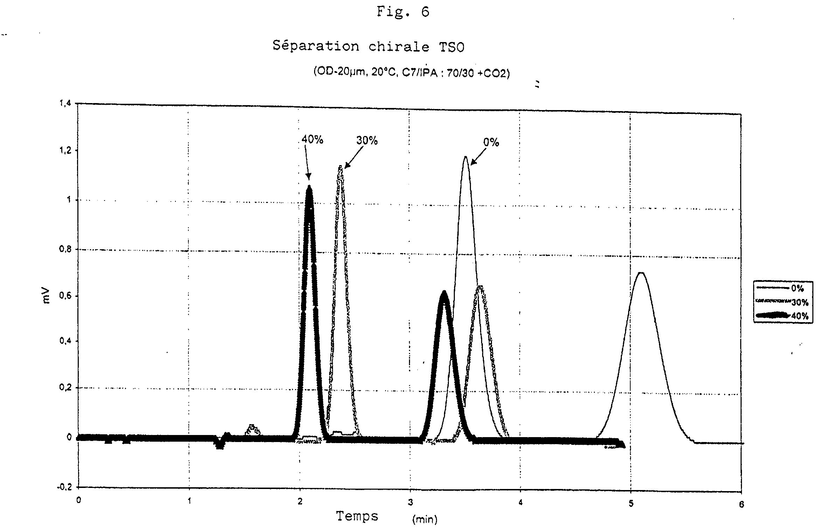

La figure 6 représente les chromatogrammes de séparation dans les deux modes d'élution (HPLC et selon l'invention). On voit bien que le solvant expansé par le CO₂ a une influence sur la séparation. A cause d'une augmentation du volume d'éluant et de sa vitesse linéaire, le temps de rétention des pics est nettement réduit et la sélectivité a été améliorée. La vitesse linéaire est de l'ordre de 0.334cm/s, vitesse donnée correspondant aux conditions (P,T,et masse volumique) du CO₂ seul à la sortie de colonne.

### Exemple 2.

On sépare les énantiomères du TSO (trans-stillbène oxide) dans les conditions suivantes, correspondant aux conditions de la chromatographie préparative, l'injection étant cette fois dite surchargée, ce qui correspond aux conditions normales d'utilisation d'une chromatographie préparative.
Colonne Chiralcel OD-20µm, 4.6mm x 25 cm (Chiral Technologies Europe, Illkirch, France)
Température 20°C
Pression sortie 1 bar (solvant non expansé) et 43 bar avec l'éluant selon l'invention
Eluant liquide : heptane/IPA 70/30 (v/v)
Débit d'éluant non expansé= 1ml/min
Débit d'éluant expansé = 2ml/min
Taux d'expansion en CO₂ de 30%
Pertes de charge de 12 et 11 bar, respectivement
Volume/quantité de TSO injecté: 100µl/3.2mg, 200µl/6.4mg, 250µl/8mg;
solvant d'injection: isopropanol (IPA)

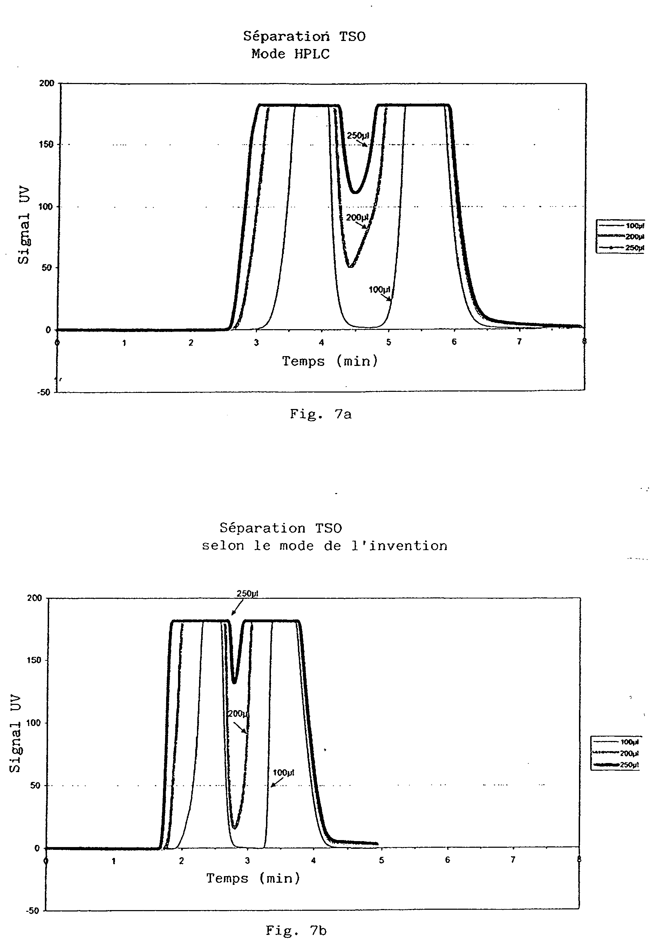

Le chromatogramme de surcharge (Fig. 7a et 7b) et les données dans le tableau 1 montrent que dans les conditions selon l'invention, pour des pertes de charge comparables, on peut réaliser une bonne séparation des énantiomères en gagnant environ 1,6 fois au niveau de la productivité par rapport au HPLC. Grâce à une diminution de temps cycle on peut ainsi réduire considérablement la consommation du solvant liquide. Le tableau 1 ci-dessous donne les valeurs pour 200µl injectés.

| Mode séparation | Temps cycle (s) | Productivité (mg_{charge}/h) | Gain | Consommation de solvant (l/g_{charge}) |
|---|---|---|---|---|
| HPLC | 240 | 96 | 1 | 1.25 |
| CO2 dissous selon l'invention | 150 | 154 | 1.6 | 0.55 |

La vitesse linéaire en mode selon l'invention est de l'ordre de 0.334cm/s (dans les mêmes conditions que dans l'exemple 1.

## Revendications

1. Procédé d'enrichissement par chromatographie d'un ou plusieurs composés d'un mélange dans au moins une colonne, à l'aide d'un éluant, **caractérisé en ce que** l'on utilise comme éluant une phase mobile liquide contenant du gaz dissous, dans laquelle la teneur en gaz dans l'éluant est comprise entre 10 et 50% en volume.

2. Procédé selon la revendication 1, **caractérisé en ce que** la pression de sortie avant le régulateur de pression est inférieure à la pression critique du gaz de l'éluant.

3. Procédé selon la revendication 1 ou 2, **caractérisé en ce qu'**il est mis en oeuvre sur au moins une colonne présentant un rapport L/D inférieur à 10, de préférence inférieur à 5.

4. Procédé selon l'une des revendications 1 à 3, dans lequel la vitesse linéaire moyenne lors de la mise en oeuvre de l'enrichissement par chromatographie est supérieur à 0.3 cm/s.

5. Procédé selon l'une des revendications 1 à 4, dans lequel le volume injecté de la solution contentant le dit composé à enrichir représente entre 1 et 20% du volume vide de ladite au moins une colonne, de préférence entre 2 et 10%.

6. Procédé selon l'une des revendications 1 à 5, dans lequel l'injection dudit mélange dans ladite au moins une colonne se fait avec un liquide.

7. Procédé selon l'une des revendications 1 à 6, dans lequel l'éluant est à une température inférieure à la température critique du gaz de l'éluant.

8. Procédé selon l'une des revendications 1 à 7, dans lequel l'éluant est à une pression qui correspond à la pression minimale à laquelle l'éluant serait une phase homogène, augmentée d'une valeur comprise entre 1 et 20 bars, de préférence entre 3 et 10 bars en sortie de ladite au moins une colonne, avant le régulateur de pression.

9. Procédé selon l'une des revendications 1 à 8, dans lequel l'éluant comprend une phase mobile liquide contenant un gaz choisi parmi le dioxyde de carbone, le protoxyde d'azote, les alcanes légers, les gaz fluorés et le dioxyde de carbone dissout.

10. Procédé selon l'une des revendications 1 à 9, dans lequel le liquide de l'éluant est choisi parmi l'eau en mélange avec les solvants organiques miscibles, les alcools primaires contenant de 1 à 4 atomes de carbone, les alcanes contenant de 5 à 10 atomes de carbone, l'acétone, l'acétonitrile, les éthers cycliques et les esters.

11. Procédé selon l'une des revendications précédentes, dans lequel l'éluant est binaire, ternaire ou un mélange avec 4 ou plus de composants.

12. Procédé selon l'une des revendications 1 à 11, mis en oeuvre sur une phase stationnaire à base de silice ou sur une phase stationnaire chirale.

13. Procédé selon l'une quelconque des revendications précédentes, **caractérisé en ce que** le gaz est dissout dans l'éluant liquide par maintient d'une pression suffisante pour obtenir une phase liquide homogène tout au long de la colonne chromatographique.

14. Utilisation d'un dispositif de chromatographie préparative pour la mise en oeuvre du procédé selon l'une quelconque des revendications 1 à 13.

15. Utilisation en chromatographie préparative d'un éluant composé d'une phase mobile fluide contenant un gaz dissous, dans laquelle la teneur en gaz dans l'éluant est comprise entre 10 et 50% en volume, et à une pression de sortie avant le régulateur de pression, inférieure à la pression critique du gaz de l'éluant et à une température inférieure à la température critique du gaz de l'éluant.

16. Utilisation en chromatographie préparative d'un éluant qui est un mélange monophasique d'un gaz et d'un liquide, dans laquelle la teneur en gaz dans l'éluant est comprise entre 10 et 50% en volume, à une pression qui correspond à la pression minimale à laquelle l'éluant serait une phase homogène, augmentée d'une valeur comprise entre 1 et 20 bars, de préférence entre 3 et 10 bars.

## Patentansprüche

1. Verfahren zur Anreicherung durch Chromatographie einer oder mehrerer Verbindungen eines Gemisches in mindestens einer Säule, mit Hilfe eines Elutionsmittels, **dadurch gekennzeichnet, dass** als Elutionsmittel eine flüssige mobile Phase verwendet wird, die gelöstes Gas enthält, wobei der Gasgehalt im Elutionsmittel zwischen 10 und 15 Vol.-% beträgt.

2. Verfahren nach dem Anspruch 1, **dadurch gekennzeichnet, dass** der Ausgangsdruck vor dem Gegendruckregler geringer ist als der kritische Druck des Gases des Elutionsmittels.

3. Verfahren nach den Ansprüchen 1 oder 2, **dadurch gekennzeichnet, dass** es auf mindestens einer Säule durchgeführt wird, die ein L/D-Verhältnis aufweist das kleiner als 10, vorzugsweise kleiner als 5 ist.

4. Verfahren nach den Ansprüchen 1 oder 3, wobei, bei der Durchführung der Anreicherung durch Chromatographie, die durchschnittliche Lineargeschwindigkeit höher als 0.3 cm/s ist.

5. Verfahren nach einem der Ansprüche 1 bis 4, wobei das Injektionsvolumen der, die zur Anreicherung der Verbindung enthaltenden Lösung zwischen 1 und 20%, vorzugsweise zwischen 2 und 10% des Hohlraumvolumens der mindestens einen Säule darstellt.

6. Verfahren nach einem der Ansprüche 1 bis 5, wobei die Einspritzung des Gemisches in die mindestens eine Säule mit einer Flüssigkeit erfolgt.

7. Verfahren nach einem der Ansprüche 1 bis 6, wobei das Elutionsmittel eine niedrige Temperatur als die kritische Gastemperatur des Elutionsmittels aufweist.

8. Verfahren nach einem der Ansprüche 1 bis 7, wobei das Elutionsmittel einen Druck aufweist, der dem Minimaldruck entspricht bei welchem das Elutionsmittel eine homogenen Phase wäre, und der um einen Wert erhöht ist, der in einem Bereich zwischen 1 und 20 bar, vorzugsweise zwischen 3 und 10 bar, an dem mindestens einen Säulenausgang, vor dem Gegendruckregler liegt.

9. Verfahren nach einem der Ansprüche 1 bis 8, wobei das Elutionsmittel eine flüssige mobile Phase umfasst, welches ein Gas enthält, das ausgewählt ist aus Kohlendioxid, Lachgas, leichten Alkanen, fluorierten Gase und gelöstem Kohlendioxid.

10. Verfahren nach einem der Ansprüche 1 bis 9, wobei die flüssige Phase des Elutionsmittels ausgewählt ist aus Wasser in einer Mischung mit mischbaren organischen Lösungsmitteln, primären Alkoholen mit 1 bis 4 Kohlenstoffatomen, Alkanen mit 5 bis 10 Kohlenstoffatomen, Aceton, Acetonitril, zyklischen Ethern und Estern.

11. Verfahren nach einem der vorangehenden Ansprüche, wobei das Elutionsmittel binär, tertiär oder ein Gemisch mit 4 oder mehr Komponenten ist.

12. Verfahren nach einem der Ansprüche 1 bis 11, das in einer, an Siliziumdioxid gebundenen Phase oder einer chiralen stationären Phase durchgeführt wird.

13. Verfahren nach einem der vorangehenden Ansprüche, **dadurch gekennzeichnet, dass** das Gas, durch Aufrechterhaltung eines ausreichenden Drucks zur Beibehaltung einer homogenen flüssigen Phase, entlang der chromatographischen Säule, im flüssigen Elutionsmittel gelöst wird.

14. Verwendung einer Vorrichtung für präparative Chromatographie zur Durchführung des Verfahrens nach einem der Ansprüche 1 bis 13.

15. Verwendung, bei einer präparativen Chromatographie
- eines Elutionsmittels, bestehend aus einer flüssigen mobilen Phase das ein gelöstes Gas enthält, wobei der Gasgehalt im Elutionsmittel zwischen 10 und 50 Vol.-% beträgt,und
- bei einem Ausgangsdruck vor dem Gegendruckregler, der niedriger ist als der kritische Druck des Gases des Elutionsmittels, und einer Temperatur, die niedriger ist als die kritische Temperatur des Elutionsmittels.

16. Verwendung, bei einer präparativen Chromatographie
- eines Elutionsmittels, welches ein einphasisches Gemisch eines Gases und einer Flüssigkeit ist, wobei der Gasgehalt im Elutionsmittel zwischen 10 und 50 Vol.-% beträgt
- bei einem Druck, der dem Minimaldruck entspricht, bei dem das Elutionsmittel eine homogenen Phase wäre, die erhöht ist um einen Wert, der in einem Bereich zwischen 1 und 20 bar, vorzugsweise zwischen 3 und 10 bar liegt.

## Claims

1. A method for enriching by chromatography one or more compounds of a mixture in at least one column using an eluent, **characterized in that** a liquid mobile phase containing dissolved gas is used as an eluent, wherein the gas content in the eluent is comprised between 10 and 50% by volume.

2. The method according to claim 1, **characterized in that** the outlet pressure before the pressure regulator is lower than the critical pressure of the eluent gas.

3. The method according to claim 1 or 2, **characterized in that** it is carried out on at least one column having an L/D ratio of less than 10, preferably less than 5.

4. The method according to one of claims 1 to 3, wherein the average linear velocity during the implementation of the enrichment by chromatography is greater than 0.3 cm/s.

5. The method according to one of claims 1 to 4, wherein the injected volume of the solution containing said compound to be enriched represents between 1 and 20% of the void volume of said at least one column, preferably between 2 and 10%.

6. The method according to one of claims 1 to 5, wherein the injection of said mixture into said at least one column is carried out with a liquid.

7. The method according to one of claims 1 to 6, wherein the eluent is at a temperature lower than the critical temperature of the eluent gas.

8. The method according to one of claims 1 to 7, wherein the eluent is at a pressure which corresponds to the minimum pressure at which the eluent would be a homogeneous phase, increased by a value comprised between 1 and 20 bar, preferably between 3 and 10 bar at the outlet from said at least one column, before the pressure regulator.

9. The method according to one of claims 1 to 8, wherein the eluent comprises a liquid mobile phase containing a gas chosen from carbon dioxide, nitrogen protoxide, light alkanes, fluorinated gases and dissolved carbon dioxide.

10. The method according to one of claims 1 to 9, wherein the eluent liquid is chosen from water in a mixture with the miscible organic solvents, primary alcohols containing 1 to 4 carbon atoms, alkanes containing 5 to 10 carbon atoms, acetone, acetonitrile, cyclic ethers, and esters.

11. The method according to one of the preceding claims, wherein the eluent is binary, ternary or a mixture with 4 or more components.

12. The method according to one of claims 1 to 11, implemented on a silica-based stationary phase or on a chiral stationary phase.

13. The method according to any one of the preceding claims, **characterized in that** the gas is dissolved in the liquid eluent by maintaining a pressure sufficient to obtain a homogeneous liquid phase throughout the length of the chromatographic column.

14. Use of a preparative chromatographic device for the implementation of the method according to any one of claims 1 to 13.

15. Use in preparative chromatography of an eluent composed of a fluid mobile phase containing a dissolved gas, wherein the gas content in the eluent is comprised between 10 and 50% by volume, and at an outlet pressure before the pressure regulator, lower than the critical pressure of the eluent gas and at a temperature lower than the critical temperature of the eluent gas.

16. Use in preparative chromatography of an eluent which is a single phase mixture of a gas and a liquid, wherein the gas content in the eluent is comprised between 10 and 50% by volume, at a pressure which corresponds to the minimum pressure at which the eluent would be a homogeneous phase, increased by a value comprised between 1 and 20 bar, preferably between 3 and 10 bar.
